# EUROPEAN PATENT APPLICATION

(11) **EP 1 767 326 A1**
(43) Date of publication of application: **28.03.2007**
(21) Application number: 06024498.5
(22) Date of filing: 14.11.2002
(51) Int. Cl.: B29C 33/70, B29C 33/72, G01N 21/94, B29C 33/56

(54) **Apparatus and method for evaluating degree of adhesion of adherents to mold surface**

(30) Priority: 16.11.2001 JP 2001350921; 07.02.2002 JP 2002030563; 18.04.2002 JP 2002115814
(62) Divisional of application: 02257859.5
(71) Applicant: Towa Corporation, Kyoto (JP)
(72) Inventor: Osada, Michio, Kyoto-shi Kyoto (JP); Kitada, Ryoji, Kyoto-shi Kyoto (JP); Hirota, Atsushi, Kyoto-shi Kyoto (JP)
(74) Representative: Forsyth, Helen Jane

(57) **Abstract**

There are provided a lower sensor (13) and an upper sensor (14) mounted respectively on top and bottom surfaces of a sensor unit (10), an operation unit (20) calculating respective measurements indicating the degree of adhesion of dirt to respective surfaces of a lower mold (1) and an upper mold (2) based on respective detection signals from the lower sensor (13) and the upper sensor (14), and a comparator unit (21) comparing each measurement from the operation unit (20) with a predetermined reference value to transmit a predetermined warning signal if the measurement is equal to or smaller than the reference value. The warning signal is thus transmitted if reflected radiation (16, 18) that is radiation (15, 17) reflected from the mold surface has its intensity equal to or smaller than the reference value. Accordingly, the degree of adhesion of dirt is quantitatively evaluated and, the cleaning according to the warning signal allows the efficiency of resin-molding operation to be enhanced, the resin-molding operation to be automated and the yield of molded products to be improved.

## Description

Apparatus and Method for Evaluating Degree of Adhesion of Adherents to Mold Surface

### BACKGROUND OF THE INVENTION

### Field of the Invention

The present invention relates to an evaluation apparatus and an evaluation method for evaluating the degree of adhesion of adherents sticking to the surface of a mold used for molding resin, namely the mold surface.

### Description of the Background Art

The degree of adhesion of adherents, dirt for example, sticking to the surface of a mold used for molding resin has been evaluated by stopping the resin-molding operation and then conducting a visual inspection of the mold surface by an operator.

Regarding the conventional evaluation of the degree of adhesion, however, as the evaluation varies depending on the operator, the degree of adhesion, the degree of dirtiness for example, may not be evaluated accurately. Accordingly, even if the dirt is a minor one and thus has no damaging effect on a molded product, the mold surface could be cleaned, resulting in degradation of the efficiency of the resin-molding operation. On the contrary, even if the dirt adheres to such a degree that could adversely affect a molded product, the degree of dirtiness may not be evaluated accurately. In such a case, the resin-molding operation could be continued without cleaning, resulting in defective products and decreased yield.

In addition, as the degree of dirtiness of the mold surface is evaluated by stopping the resin-molding operation, the efficiency of the resin-molding operation is deteriorated and the operation is hindered from being automated.

One object of the present invention is to provide an evaluation apparatus and an evaluation method for evaluating the degree of adhesion of adherents sticking to a mold surface, the degree of adhesion to the mold surface being evaluated quantitatively so as to accurately judge the degree of adhesion thereby improve the efficiency of the resin-molding operation, automatically improve the efficiency and increase the yield of molded products.

In recent years, molded products that are produced by molding resin have been required to have a higher quality. In particular, a molded product which is manufactured by means of a resin-sealing mold through a process of sealing electronic components with resin, namely the package of LSI for example, is required to have a still higher quality, for example, the dimension accuracy and the quality of appearance. It accordingly becomes significantly important to ensure the releasability of a molded product from a mold.

According to a conventional method, the releasability of a molded product from a mold is ensured by providing a release layer on the mold surface before a resin-sealing process by means of a new mold and melted resin intended for use as a sealing material. Specifically, melted resin containing a sufficient amount of release agent is used to conduct molding operation several times. Accordingly, in a resin-flowing region where melted resin flows within the mold, a release layer is formed on the mold surface. After this, the melted resin intended for use as a sealing material is used to conduct preparatory molding operation several times in order to check the moldability and quality of a molded product for example. If no particular problem arises, main molding operation is started to manufacture the package as a product.

In the molding operation, such adherents as dirt are deposited on the mold surface. Then, the mold surface is cleaned by brushing the mold surface with a cleaning brush, providing a cleaning sheet between molds and conducting resin-sealing operation, or using such cleaning resin as melamine resin and conducting resin-sealing operation. After this, in a similar manner to that when a new mold is used, molding operation by means of melted resin intended to ensure releasability and preparatory molding conducted by means of melted resin intended for use as resin-sealing material are conducted successively. After the moldability for example is checked, the main molding operation is started.

The above-described conventional cleaning, however, is inevitably accompanied by deposition of such adherents as dirt to the mold surface through the molding operation. The adherents are deposited for the reason described below.

Immediately after the release layer containing a specific component serving as a release agent is formed on the mold surface, preparatory molding operation and main molding operation are successively carried out with melted resin intended for use as resin-molding material. Here, in the upper part of the release layer, any component other than the specific component, namely a component which degrades the releasability (hereinafter referred to "releasability degrading component") is generated. Accordingly, in the part where the releasability degrading component is generated on the mold surface, the releasability is deteriorated.

As the main molding operation is repeated, matters contained in the melted resin intended for use as resin sealing material are deposited gradually as adherents to the part on the mold surface where the releasability is degraded. Moreover, as oxidation of the deposited adherents is taking place, the firmness of bonding between the molded product and the release layer increases.

As the main molding operation is further repeated, the thickness of the deposited adherents gradually increases. Finally, the releasability of the molded product from the mold is deteriorated to such a degree that adversely influences the dimension accuracy and the quality of appearance of the molded product, i.e. package of LSI for example.

Moreover, molded products manufactured by a mold which is used for molding resin have recently been required to have a severer quality, for example, dimension accuracy and the quality of appearance of the surface. Accordingly, in order to improve the moldability as well as the releasability of the molded product from the mold, it is necessary to effectively clean the surface of the mold. According to a conventional method, the mold surface is cleaned by a cleaning apparatus combining a rotating brush or reciprocating brush with a sucking mechanism.

The conventional cleaning apparatus described above, however, has a problem that, when a small-sized and precision product is mold, the apparatus cannot remove residue of the resin that sticks to fine depressions and corners in the cavity of the mold for molding resin.

The mold is generally used for sealing electronic components, with resin, of a semiconductor chip for example mounted on a leadframe or printed circuit board (hereinafter circuit board). In this case, in addition to the above-discussed reason, there is another reason for the fact that the resin residue cannot be removed completely. Specifically, as the size and thickness of a completed product or package are reduced, sealing resin of a high bonding strength to the circuit board is employed for the purpose of ensuring the reliability of the package. The high bonding strength of the sealing resin, however, allows the sealing resin to exhibit a high bonding strength to the mold surface. Then, it is likely that the resin residue sticks to the mold surface and the sticking resin is more difficult to remove.

It has been proposed to use a low-voltage mercury lamp for cleaning with ultraviolet radiation. However, it takes a long time to remove resin residue sticking to the mold surface.

It is seen from the above that it takes a considerable time to clean the mold used for molding resin, in order to maintain the quality of molded products.

### SUMMARY OF THE INVENTION

In order to achieve that one object of the present invention, an evaluation apparatus evaluating the degree of adhesion of adherents to a mold surface of a mold used for molding resin, according to the present invention, has the structure described below.

The evaluation apparatus of the present invention includes a detection unit for detecting optical data of the mold surface, an operation unit for calculating a measurement indicating the degree of adhesion based on the optical data, and a comparison unit comparing the measurement with a predetermined reference value to generate, when the measurement indicating the degree of adhesion is equal to or larger than the reference value, a warning signal indicating that the adhesion is to such a degree that causes a malfunction.

In this way, the degree of adhesion of adherents to the mold surface is quantitatively calculated as the measurement based on the detected optical data of the mold surface. If the measurement is equal to or larger than the reference value, the warning signal is generated indicating that the degree of adhesion is to such a degree that causes a malfunction. The degree of adhesion is thus accurately determined based on the measurement. Moreover, any measures can be taken for avoiding the malfunction according to the warning signal. Then, the efficiency of the resin molding operation is enhanced, the resin molding operation is automated, and the yield of molded products is enhanced.

In the evaluation apparatus evaluating the degree of adhesion of adherents to the mold surface according to the present invention, the detection unit emits radiation to detect the intensity of reflected radiation of the emitted radiation, the operation unit calculates a value, as the measurement, based on the intensity of the reflected radiation, and the comparison unit compares the intensity of the reflected radiation with the reference value.

As the intensity of the reflected radiation is detected, the evaluation apparatus of the present invention evaluates, not only the degree of adhesion of adherents to the entire mold surface, but also any location to which adherents are likely to stick or a location from which adherents are likely to be removed, using such a location as a pinpoint.

In the evaluation apparatus evaluating the degree of adhesion of adherents to the mold surface according to the present invention, the detection unit takes a picture of a predetermined area of the mold surface, the operation unit calculates, as the measurement, an area where the density of the picture exceeds a predetermined level, and the comparison unit compares the area with the reference value.

The picture of a predetermined area of the mold surface is taken, and then the degree of adhesion of adherents is evaluated based on an area where the density exceeds a predetermined level. The degree of adhesion is thus evaluated for the whole of a predetermined area of the mold in a short period of time.

In order to achieve that object of the present invention, an evaluation method evaluating the degree of adhesion of adherents to a mold surface of a mold used for molding resin, according to the present invention, includes the steps as described below.

The evaluation method of the present invention includes the steps of detecting optical data of the mold surface, calculating a measurement indicating the degree of adhesion based on the optical data, and comparing the measurement with a reference value to generate, when the measurement indicating the degree of adhesion is equal to or larger than the reference value, a warning signal indicating that the adhesion is to such a degree that causes a malfunction.

In this way, the degree of adhesion of adherents to the mold surface is quantitatively calculated as the measurement based on the detected optical data of the mold surface. If the measurement is equal to or larger than the reference value, the warning signal is generated indicating that the degree of adhesion is to such a degree that causes a malfunction. The degree of adhesion is thus accurately determined based on the measurement. Moreover, any measures can be taken for avoiding the malfunction according to the warning signal. Then, the efficiency of the resin molding operation is enhanced, the resin molding operation is automated, and the yield of molded products is enhanced.

A surface treatment apparatus, for a mold surface of a mold used for molding resin, treats a layer formed on the mold surface for the purpose of ensuring releasability, from the mold surface of a resin-flowing portion where melted resin flows, of cured resin generated from the melted resin by being cured in the resin-flowing portion. The surface treatment apparatus has the following characteristics.

Namely, the surface treatment apparatus includes an irradiation mechanism emitting excimer ultraviolet radiation to the mold surface, and a transport mechanism moving the irradiation mechanism to a location above the mold surface. The irradiation mechanism emits the excimer ultraviolet radiation under an irradiation condition without causing the layer formed on the mold surface to peel off from the mold surface.

In this way, the mold surface is irradiated with the excimer ultraviolet radiation under such an irradiation condition which does not cause the layer formed on the mold surface to peel off from the mold surface. Accordingly, the surface of the layer formed by ozone (O₃) and active oxygen caused by the excimer ultraviolet radiation, particularly the active oxygen, is activated. Then the state of the mold surface is restored to its initial state at the time immediately after the layer is formed, which ensures the releasability of the cured resin from the mold surface.

The surface treatment apparatus further includes a jetting mechanism emitting a jet of gas having a property of suppressing attenuation of the excimer ultraviolet radiation to a region near the mold surface.

Attenuation of the excimer ultraviolet radiation near the mold surface is thus suppressed. The degree of activation of the surface of the layer thus formed is not lowered, and thus the efficiency of activating the mold surface while the mold surface is restored to the initial state is maintained. Even if the mold surface is uneven, the surface of the layer formed on the uneven part is uniformly activated.

The surface treatment apparatus further includes a heating mechanism heating the gas.

The temperature of the mold surface is suppressed from decreasing, so that the effect of activating the surface of the layer is maintained.

The surface treatment apparatus further includes an evaluation mechanism optically evaluating a state of the mold surface to determine whether or not excimer ultraviolet radiation is to be emitted to the mold surface, by the irradiation mechanism or determine an irradiation condition of the excimer ultraviolet radiation, based on result of the evaluation.

Based on the result of the optical evaluation of the state of the mold surface, it is determined whether or not the excimer ultraviolet radiation is emitted to the mold surface, or an irradiation condition of the excimer ultraviolet radiation is determined. The excimer ultraviolet radiation is thus emitted under an appropriate condition as required to allow the mold surface to be restored to the initial state. Then, the working efficiency of the resin-molding operation is improved.

In a surface treatment method for a mold surface of a mold used for molding resin, a layer formed on the mold surface is treated for the purpose of ensuring releasability, from the mold surface of a resin-flowing portion where melted resin flows, of cured resin generated from the melted resin by being cured in the resin-flowing portion. The surface treatment method includes the steps of moving an irradiation mechanism to a location above the mold surface, and emitting excimer ultraviolet radiation to the mold surface by the irradiation mechanism. In the step of emitting the excimer ultraviolet radition, the excimer ultraviolet radiation is emitted under an irradiation condition without causing the layer formed on the mold surface to peel off from the mold surface.

In this way, the mold surface is irradiated with the excimer ultraviolet radiation under such an irradiation condition which does not cause the layer formed on the mold surface to peel off from the mold surface. Accordingly, the surface of the layer formed by ozone (O₃) and active oxygen caused by the excimer ultraviolet radiation, particularly the active oxygen, is activated. Then, the state of the mold surface is restored to its initial state immediately after the layer is formed, which ensures the releasability of the cured resin from the mold surface.

The surface treatment method further includes the step of emitting a jet of gas having a property of suppressing attenuation of the excimer ultraviolet radiation to a region near the mold surface.

Attenuation of the excimer ultraviolet radiation near the mold surface is thus suppressing. The degree of activation of the surface of the layer thus formed is not lowered, and thus the efficiency of activating the mold surface while the mold surface is restored to the initial state is maintained. Even if the mold surface is uneven, the surface of layer formed on the uneven part is uniformly activated.

The surface treatment method further includes the step of heating the gas.

Decreasing of the temperature of the mold surface is suppressed, so that the effect of activating the surface of the layer is maintained.

The surface treatment method further includes the steps of optically evaluating a state of the mold surface; and determining whether or not excimer ultraviolet radiation is to be emitted to the mold surface by the irradiation mechanism or determining an irradiation condition of the excimer ultraviolet radiation, based on result of the evaluation.

Based on the result of the optical evaluation of the state of the mold surface, it is determined whether or not the excimer ultraviolet radiation is emitted to the mold surface, or an irradiation condition of the excimer ultraviolet radiation is determined. The excimer ultraviolet radiation is thus emitted under an appropriate condition as required to allow the mold surface to be restored to the initial state. Then, the working efficiency of the resin-molding operation is improved.

A cleaning method of removing adherents to a surface of a resin-molding mold used for molding resin includes the steps of emitting excimer radiation to the surface of the resin-molding mold to decompose the adherents, and removing the decomposed adherents from the surface.

In this way, the excimer radiation that has a single peak wavelength, a high energy conversion efficiency and a high photon energy is emitted to the mold surface to decompose adherents to the mold surface of the resin-molding mold in a short period of time. The adherents to the surface of the resin-molding mold are thus removed in a short period of time.

The excimer radiation has a center wavelength of 172 nm or less.

The excimer radiation that has a single peak wavelength of 172 nm or less corresponding to the short wave, a high energy conversion efficiency and a higher photon energy is emitted to the mold surface to decompose adherents to the mold surface of the resin-molding mold in a shorter period of time.

A cleaning apparatus removes adherents to a surface of a resin-molding mold used for molding resin. The cleaning apparatus includes an irradiation mechanism emitting excimer radiation to the surface of the resin-molding mold to decompose the adherents, and a removal mechanism removing the decomposed adherents from the surface.

In this way, the excimer radiation that has a single peak wavelength, a high energy conversion efficiency and a high photon energy is emitted to the mold surface to decompose adherents to the mold surface of the resin-molding mold in a short period of time. The adherents to the surface of the resin-molding mold are thus removed in a short period of time.

Regarding the cleaning apparatus the excimer radiation has a center wavelength of 172 nm or less.

The excimer radiation that has a single peak wavelength of 172 nm or less corresponding to the short wave, a high energy conversion efficiency and a higher photon energy is emitted to the mold surface to remove adherents to the mold surface of the resin-molding mold in a shorter period of time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a partial cross sectional view of an evaluation apparatus evaluating the degree of adhesion of adherents according to a first embodiment of the present invention, showing that an optical sensor of the apparatus emits radiation and detects reflected radiation thereof.
Fig. 2 is a flowchart showing a method of evaluating the degree of adhesion of adherents according to the first embodiment of the present invention.
Fig. 3 is a partial cross sectional view of an evaluation apparatus evaluating the degree of adhesion of adherents according to a second embodiment of the present invention, showing that a CCD (charge coupled device) camera of the apparatus takes a picture of a certain area of a mold.
Fig. 4 is a flowchart showing a method of evaluating the degree of adhesion of adherents according to the second embodiment of the present invention.
Fig. 5 is a schematic front view of a surface treatment apparatus for a mold surface showing that the surface treatment apparatus is incorporated in a resin-sealing apparatus.
Fig. 6 is a schematic side view of the surface treatment apparatus in Fig. 5 showing that the apparatus irradiates a mold surface with excimer ultraviolet radiation.
Fig. 7 is a schematic front view of a surface treatment apparatus for a mold surface showing that the apparatus is incorporated in a resin-sealing apparatus.
Fig. 8 is a schematic front view of a surface treatment apparatus for a mold surface showing that the apparatus is incorporated in a resin-sealing apparatus to perform surface treatment.
Fig. 9 is a schematic front view of a resin-sealing apparatus having a cleaning apparatus attached thereto.
Fig. 10 is a schematic side view of the resin-sealing apparatus shown in Fig. 9 showing that the cleaning apparatus cleans the surface of a mold with excimer radiation.
Fig. 11 illustrates an effect of the cleaning apparatus as compared with a conventional cleaning apparatus using ultraviolet radiation from a low-voltage mercury lamp.
Fig. 12 is a schematic front view showing main portions of a resin-sealing apparatus having a cleaning apparatus attached thereto.

### DESCRIPTION OF THE PREFERRED EMBODIMENTS

### First Embodiment

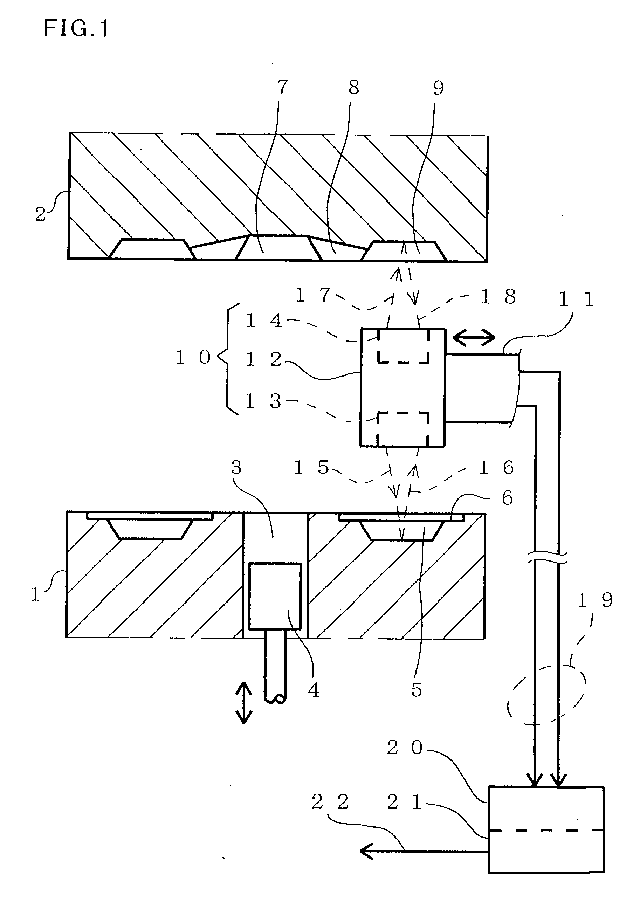

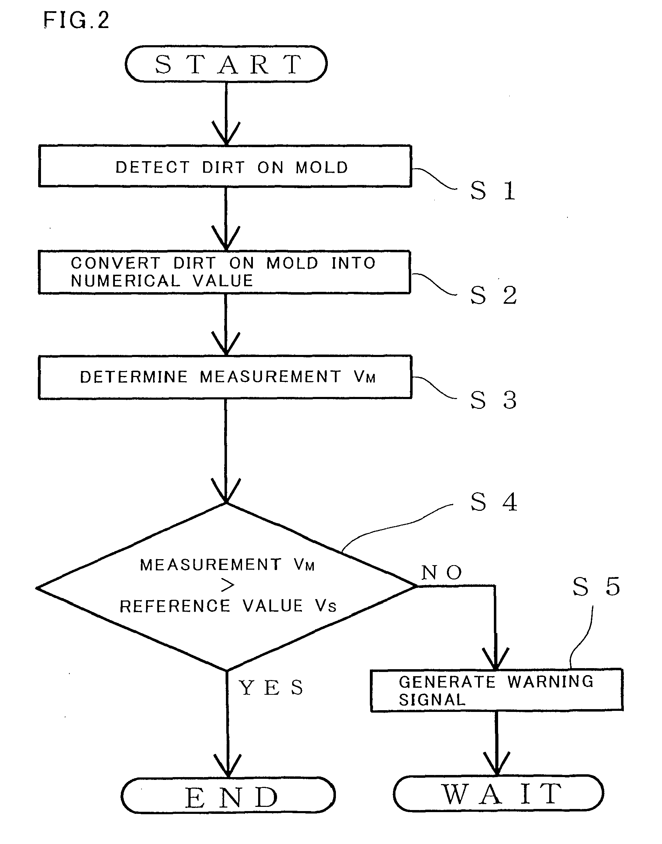

With reference to Figs. 1 and 2, an apparatus and a method for evaluating the degree of adhesion of adherents to the mold surface are described. According to this embodiment, a mold used for molding resin is described. Specifically, a mold is described that is used for a resin-sealing apparatus for sealing electronic components mounted on a leadframe with resin. Here, as an example of adherents to the mold surface, dirt sticking to the mold surface is described.

Fig.1 is a partial cross sectional view of the evaluation apparatus evaluating the degree of adhesion of adherents according to this embodiment, showing that an optical sensor of the apparatus emits radiation and detects reflected radiation of the emitted radiation. Fig. 2 is a flowchart showing a method of evaluating the degree of adhesion of adherents according to this embodiment.

Referring to Fig. 1, a mold used for sealing with resin is constituted of a lower mold 1 and an upper mold 2 placed opposite to this lower mold 1. Lower mold 1 has a pot 3 formed of a cylindrical space. A substantially columnar plunger 4 is provided in pot 3 to be movable up-and-down. Further, a lower cavity 5 is provided to lower mold 1 that is a space where melted resin is injected. A recess 6 around lower cavity 5 receives a leadframe placed therein.

Upper mold 2 has a cull 7 placed substantially opposite to pot 3 for holding melted resin. A resin channel 8 where melted resin flows and an upper cavity 9 where the melted resin is injected are provided to successively communicate with cull 7.

A sensor unit 10 is provided between lower mold 1 and upper mold 2 that is secured to an arm 11 and capable of moving forward/backward. Sensor unit 10 is constituted of a holder 12, a lower sensor 13 attached to the bottom of holder 12 at a predetermined distance from a surface (mold surface) of lower mold 1 and an upper sensor 14 attached to the top of holder 12 at a predetermined distance from the mold surface of upper mold 2.

Lower sensor 13 is an optical sensor having a light-emitting unit emitting radiation 15 and a light-receiving unit receiving reflected radiation 16 that is the reflected radiation of radiation 15 from the mold surface of lower cavity 5. Similarly, upper sensor 14 is an optical sensor having a light-emitting unit emitting radiation 17 and a light-receiving unit receiving reflected radiation 18 that is the reflected radiation of radiation 17 from the mold surface of cavity 9. Lower sensor 13 and upper sensor 14 convert respective intensities of reflected radiation 16 and reflected radiation 18 that are detected optical data into predetermined detection signals (voltages for example) respectively, and supply those respective detection signals to an operation unit 20 via a signal line 19. It is noted that these lower sensor 13 and upper sensor 14 are optical sensors using infrared radiation, laser or the like, other than visible radiation.

Operation unit 20 constituted of an A/D converter for example individually calculates, based on respective detection signals supplied from lower sensor 13 and upper sensor 14, respective measurements indicative of the degree of adhesion of adherents to the mold surface of lower mold 1 and of adherents to the mold surface of upper mold 2. A comparator unit 21 compares respective measurements indicative of the degree of adhesion for lower mold 1 and upper mold 2 that are provided from operation unit 20 with a predetermined reference value. If the measurements satisfy a predetermined condition for the reference value, the comparator transmits a predetermined warning signal via a signal line 22. Operation unit 20 treats a value, which has been calculated based on a measurement as required, as a new measurement. Comparator unit 21 compares the new measurement with the reference value. If the new measurement satisfies a predetermined condition for the reference value, a predetermined warning signal is transmitted.

According to this embodiment, an operation of the evaluation apparatus evaluating the degree of adhesion is described with reference to Figs. 1 and 2. As shown in Fig. 1, sensor unit 10 is allowed to enter between lower mold 1 and upper mold 2. In step S1 of Fig. 2, the degree of adhesion of adherents, namely dirt, to the mold surface is detected. Specifically, lower sensor 13 and upper sensor 14 in Fig. 1 emit radiation 15 and radiation 17 respectively toward respective mold surfaces of lower cavity 5 and upper cavity 9. Further, lower sensor 13 and upper sensor 14 respectively receive reflected radiation 16 and reflected radiation 18 reflected from respective mold surfaces of lower cavity 5 and upper cavity 9, use reflected radiation 16 and reflected radiation 18 as optical data, and convert respective intensities of radiation 16 and radiation 18 into electrical detection signals. The detection signals are then transmitted to operation unit 20. The greater the degree of dirtiness on the mold surfaces is, the lower the intensities of reflected radiation 16 and reflected radiation 18 received by lower sensor 13 and upper sensor 14.

The evaluation apparatus evaluating the degree of adhesion of adherents according to this embodiment thus detects dirt, if any location of the mold surface which is prone to dirt sticking thereto is known in advance, by using this location as a pinpoint.

Next, in step S2, the degree of adhesion of dirt is converted into a numerical value. Specifically, operation unit 20 in Fig. 1 performs individual calculation of the degree of adhesion of dirt to respective mold surfaces of lower mold 1 and upper mold 2 based on the detection signals supplied respectively from lower sensor 13 and upper sensor 14. Here, the degree of adhesion is converted into a numerical value through analog-to-digital conversion of the detection signal representing voltage, for example.

In step S3, based on respective intensities of reflected radiation 16 and reflected radiation 18 as received, measurement V_{M} is then determined that indicates the degree of adhesion of dirt to each of respective mold surfaces of lower mold 1 and upper mold 2. Here, the intensity of the reflected radiation is regarded as a direct measurement. Specifically, measurement is taken multiple times for the same location prone to dirt adhering thereto, this location being used as a pinpoint, for example, or measurement is taken for multiple locations of the mold surface. The average of a plurality of values resultant from this measurement is calculated by operation unit 20, and the calculated average is used as measurement V_{M}. Step S3 may be skipped as required and, if step S3 is skipped, the numerical value determined in step S2 is used as measurement V_{M}.

In step S4, operation unit 20 then compares measurement V_{M} determined in step S3 with a reference value Vₛ representing the intensity of reflected radiation that is stored in advance. Here, operation unit 20 stores in advance, as a threshold, i.e., reference value Vₛ, the value of the intensity of the reflected radiation indicating the greatest degree of dirt that still has no adverse effect on the molding operation, namely, the intensity of reflected radiation indicating the degree of adhesion immediately before occurrence of molding failure.

In step S4, comparator unit 21 compares measurement V_{M} with reference value Vₛ. If relation: measurement V_{M} > reference value Vₛ is satisfied for both of lower mold 1 and upper mold 2, which means that respective intensities of reflected radiation 16 and reflected radiation 18 are sufficiently high and accordingly comparator unit 21 determines that the degree of adhesion of dirt to the mold surface is smaller than the reference. After the evaluation of the degree of adhesion is completed, resin-molding operation is continued as required.

If relation: measurement V_{M} ≤ reference value Vₛ is satisfied for at least one of lower mold 1 and upper mold 2, that is, if measurement V_{M} is equal to or smaller than reference value Vₛ, at least one of the intensities of reflected radiation 16 and reflected radiation 18 is not great enough. It is accordingly determined that the degree of adhesion of dirt to the mold surface is equal to or greater than the reference and the process proceeds to step S5.

It is noted that the degree of adhesion of dirt may be determined based on relations V_{M} ≥ Vₛ and V_{M} < Vₛ.

In step S5, comparator unit 21 generates and outputs a warning signal to signal line 22. A control unit (not shown) which receives this warning signal stops the resin-molding operation and generates a signal for starting cleaning. Accordingly, a cleaner (not shown) starts cleaning. The evaluation apparatus evaluating the degree of adhesion is on standby until the cleaning is completed. After the cleaning, the evaluation apparatus has to evaluate again the degree of adhesion of dirt and thus returns to the operation in step S1 of Fig. 2.

As discussed above, the evaluation apparatus of this embodiment compares measurement V_{M} indicating the degree of adhesion of dirt that is calculated according to optical data of the mold surface with predetermined reference value Vₛ to evaluate the degree of adhesion of dirt and generates a warning signal if cleaning is necessary. The degree of adhesion of dirt is thus evaluated quantitatively Without the possibility of variation in evaluation due to subjective evaluation by an operator in charge.

The warning signal indicates an appropriate timing for cleaning and thus the efficiency of the resin-molding operation is enhanced, the resin-molding operation is automated, and the yield is improved.

Moreover, as the measurement to be compared with the reference value, not only measurements based on the intensity of reflected radiation detected at a plurality of locations on the mold surface, but also measurements detected at one location may be used. Accordingly, evaluation may be made of the degree of adhesion of dirt not only on the entire mold surface but also at any pinpoint which is particularly prone to dirt adhering thereto.

A modification of the evaluation apparatus of this embodiment is described below. According to the discussion above, respective intensities of reflected radiation 16 and reflected radiation 18 that are calculated by operation unit 20 based on detection signals respectively generated by lower sensor 13 and upper sensor 14 are used directly as measurement V_{M} and reference value Vₛ. A similar effect to that achieved by the evaluation apparatus of the above-discussed embodiment is obtained by the evaluation apparatus of the modification as described below.

For the intensity of reflected radiation that is calculated by operation unit 20, a value of ratio R_{M} with respect to a predetermined initial value, 100, is determined and, this value of ratio R_{M} is compared with a predetermined value of ratio R_{TH}. The initial value is calculated by operation unit 20, based on respective detection signals generated by lower sensor 13 and upper sensor 14 for the mold surface before resin-molding. Here, the initial value indicates the intensity of each of reflected radiation 16 and reflected radiation 18 when radiation is reflected from the plating itself of the mold, namely the intensity of reference reflected radiation. Accordingly, the value of ratio R_{M} calculated by operation unit 20 is the value of ratio between the intensity of each of reflected radiation 16 and reflected radiation 18 as measured and the intensity of the reference reflected radiation that is reflection from the plating itself of the mold, and this ratio is represented by percentage with respect to the intensity of the reference reflected radiation of 100.

The evaluation apparatus of this modification then compares in step S4 the calculated value of ratio R_{M} with predetermined value of ratio R_{TH} by comparator unit 21 of Fig. 1. Here, predetermined value of ratio R_{TH} is determined by experiment in advance. If the intensity of each of reflected radiation 16 and reflected radiation 18 that is measured with respect to 100 of the intensity of the reference reflected radiation by experiment is at least 95 for example, there is no particular problem in terms of the quality of molded products produced through resin-molding by lower mold 1 and upper mold 2. In this case, the predetermined value of ratio R_{TH} is 95 %.

In step S4, comparator unit 21 compares the calculated value of ratio R_{M} with the predetermined value of ratio R_{TH}. If a relation R_{M} ≥ R_{TH} is satisfied for both of lower mold 1 and upper mold 2, in other words, if a relation R_{M} ≥ 95% is satisfied, the intensity of each of reflected radiation 16 and reflected radiation 18 is sufficiently large. Then, operation unit 20 determines that the degree of adhesion of dirt to the mold surface is smaller than the reference. Then, evaluation of the degree of adhesion by the evaluation apparatus is completed. As required, resin-molding operation is continued.

In step S4, if a relation R_{M} < R_{TH} is satisfied for at least one of lower mold 1 and upper mold 2, i.e., a relation RM < 95% is satisfied, the intensity of at least one of reflected radiation 16 and reflected radiation 18 is not sufficiently large. Accordingly, the degree of dirt to the mold surface is at least the reference. After the operation in step S5 by the evaluation apparatus, the operation is carried out by the evaluation apparatus as described above.

According to the description above, lower sensor 13 and upper sensor 14 simultaneously detect the degree of adhesion of dirt to respective mold surfaces of lower mold 1 and upper mold 2. Alternatively, the evaluation apparatus may have sensor unit 10 with its top or bottom provided with one optical sensor, sensor unit 10 being inverted by arm 11, and the degree of adhesion of dirt to respective mold surfaces of lower mold 1 and upper mold 2 being detected successively. Such an evaluation apparatus also achieves an effect similar to that of the evaluation apparatus of the above-discussed embodiment.

Further, although the evaluation apparatus of this embodiment converts the degree of adhesion of dirt into a numerical value in step S2, steps S2 and S3 may be skipped and the degree of adhesion of dirt may be evaluated without operation unit 20. In this case, comparator unit 21 directly compares in step S4 measurements of respective detection signals from lower sensor 13 and upper sensor 14 with a reference value (e.g. voltage) stored in advance. Then, if the measurement according to one of reflected radiation 16 and reflected radiation 18 is equal to or smaller than the equal value, it is determined that the degree of adhesion of dirt to the mold surface is equal to or greater than the reference and the process proceeds to step S5.

Moreover, lower sensor 13 and upper sensor 14 may be attached to such a transport mechanism as loader/unloader. In this case, the degree of adhesion of dirt is evaluated for each resin-molding operation as required, so that in-line monitoring of the dirt of the mold is possible. Then, even if dirt unexpectedly adheres to the mold, the dirt is appropriately found and the degree of dirtiness is accurately evaluated. A warning signal is generated depending on the degree of dirtiness so as to prevent defective products from being manufactured.

### Second Embodiment

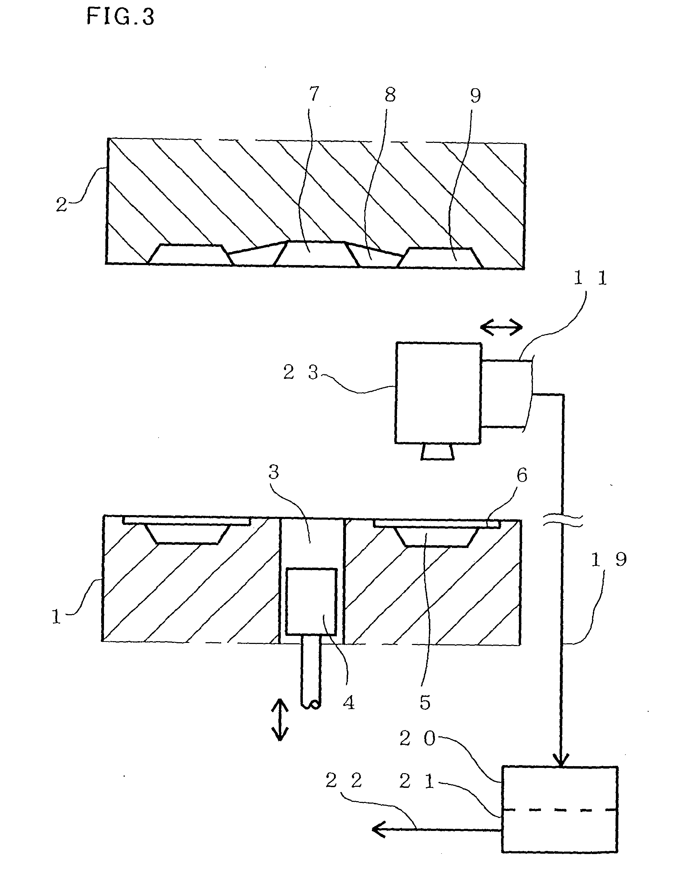

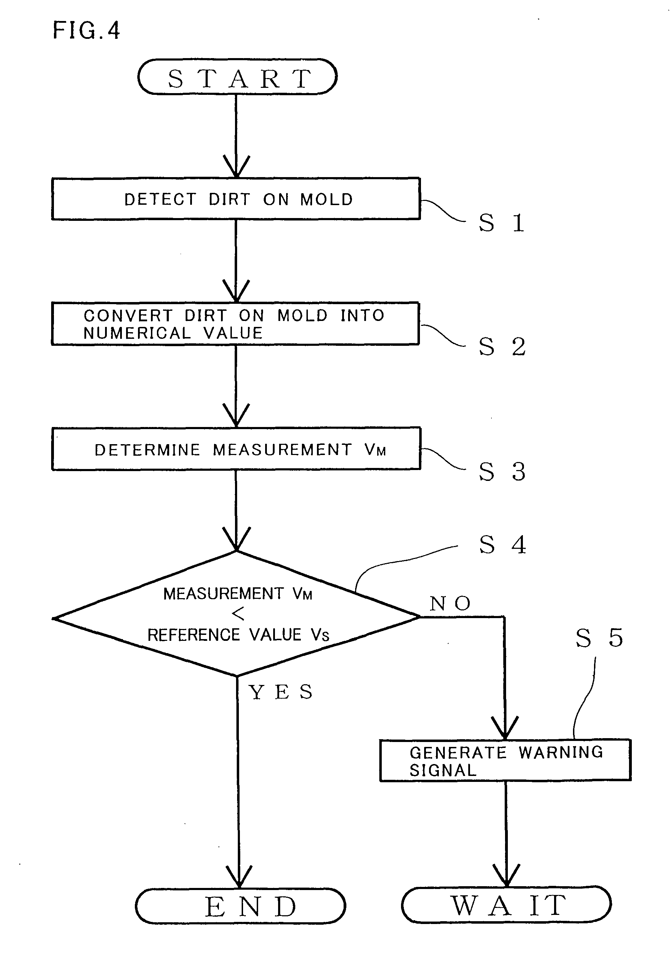

With reference to Figs. 3 and 4, an evaluation apparatus and an evaluation method for evaluating the degree of adhesion of adherents to the mold surface according to a second embodiment of the present invention are described. Fig. 3 is a partial cross sectional view of the evaluation apparatus of this embodiment showing that a CCD camera takes a picture of a certain area of a mold. Fig. 4 is a flowchart showing the evaluation method of this embodiment. Those components of the evaluation apparatuses of the first embodiment in Fig. 1 and the second embodiment in Fig. 3 that have the same function are denoted by the same reference character.

As shown in Fig. 3, the evaluation apparatus of this embodiment has CCD camera 23 attached to an arm 11, instead of sensor unit 10 of the first embodiment. CCD camera 23 is inverted by arm 11 to take a picture of any of a lower cavity 5 and an upper cavity 9. CCD camera 23 is positioned in the vertical direction so that the entire mold surfaces of lower cavity 5 and upper cavity 9 are in view of CCD camera 23 and CCD camera 23 is focused on the mold surfaces.

Two CCD cameras may be attached to arm 11 to face upward and downward respectively. In this case, respective pictures of the cavities both can be taken without inverting arm 11.

The evaluation apparatus of this embodiment operates as described below. As shown in Fig. 3, CCD camera 23 is allowed to enter between a lower mold 1 and an upper mold 2. In step S1 in Fig. 4, CCD camera 23 takes a picture of the mold surface of the entire bottom of lower cavity 5. The picture thus taken is optical data, and any portion of the picture that has a relatively high density corresponds to a part to which dirt adheres.

In step S2, the degree of adhesion of adherents, i.e., dirt, is converted into a numerical value, based on the image of lower cavity 5. Specifically, an operation unit 20 in Fig. 3 binarizes the image of lower cavity 5 according to a predetermined reference level, i.e., threshold of the density. This threshold is determined in advance by experiment.

In step S3, operation unit 20 calculates a measurement V_{M} which is a sum of areas each having the density of the binarized image that is equal to or higher than the threshold, namely a sum of dirty areas.

In step S4, a comparator unit 21 in Fig. 3 compares measurement V_{M} with a reference value Vₛ which is stored in advance. Reference value Vₛ relates to the magnitude of dirty areas. Reference value Vₛ is determined in advance as described below and stored in comparator unit 21 in Fig. 3. Specifically, as resin-molding operation is repeated, dirty areas gradually increase, resulting in defective molded products. Here, the sum of dirty areas immediately before occurrence of any defect in molded products is determined as reference value Vₛ.

In step S4, if a relation: measurement V_{M} < reference value Vₛ (or V_{M} ≤ Vₛ) is satisfied, the dirty areas are small enough and then the evaluation apparatus determines that the degree of adhesion of dirt to the mold surface is smaller than the reference value, and the evaluation of the degree of adhesion is completed. The resin-molding operation is subsequently continued as required.

In step S4, if a relation: measurement V_{M} ≥ reference value Vₛ (or V_{M} > Vₛ) is satisfied, the dirty areas are not small enough and then the evaluation apparatus determines that the degree of adhesion of dirt to the mold surface is equal to or greater than the reference value to perform an operation in step S5. Then, the evaluation apparatus of this embodiment performs the operation in step S5 similarly to the evaluation apparatus of the first embodiment.

As discussed above, the evaluation apparatus of this embodiment generates a warning signal, based on the optical data of the mold surface, namely image, when dirt adheres to such a degree that requires cleaning, as the evaluation apparatus of the first embodiment. In this way, the degree of adhesion of dirt is quantitatively evaluated. Accordingly, the efficiency of the resin-molding operation is enhanced, the resin-molding operation is automated and the yield is improved.

The evaluation of the degree of adhesion of dirt is performed based on the image obtained by taking a picture of the entire mold surface. The degree of adhesion of dirt to the entire mold surface is thus evaluated in a short period of time.

Respective evaluation apparatuses of the above-described embodiments each start cleaning according to a warning signal. Alternatively, the control unit may generate a warning signal indicating an abnormal state by lighting a warning lamp, for example. In this case, an operator in charge stops the resin-molding operation to start cleaning.

The evaluation apparatuses respectively of the first and second embodiments use, as optical data, the received reflected radiation or the image obtained by taking the picture to calculate a measurement indicative of the degree of adhesion of dirt. The optical data may include color components and then a measurement may be calculated. Specifically, the evaluation apparatus of the first embodiment may measure the intensity of the reflected radiation based on color components, and the evaluation apparatus of the second embodiment may process the density not only on the basis of monochrome but also on the basis of color contrast. Then, depending on the type of melted resin which causes dirt, optical data may include color components so as to more accurately evaluate the degree of adhesion.

The mold may be cleaned with a brush for example, by means of ultraviolet radiation or by injecting melamine resin into each cavity.

Each time the resin-molding operation is done or the resin-molding operation is done a relatively small number of times, sensor unit 10 may be allowed to enter between lower mold 1 and upper mold 2 to evaluate the degree of adhesion. In this case, the degree of adhesion of dirt to the mold surface is monitored substantially in the line. Then, even if dirt adheres to the mold surface unexpectedly, the dirt is appropriately found and the degree of adhesion is accurately evaluated. Depending on the degree of dirtiness, a warning signal may be generated to prevent defective products from being manufactured, for example.

Moreover, it may be determined by experiment how many times the resin-molding operation is done before the degree of adhesion of dirt reaches or exceeds the reference value. Then, in the stage immediately before the determined number is reached, the degree of adhesion may be evaluated, for example, each time the resin-molding operation is carried out. In this case, the time required for evaluation of the degree of adhesion is shortened to increase the efficiency of the entire resin-sealing operation.

Regarding respective evaluation apparatuses of the embodiments discussed above, dirt is referred to as an example of matters adhering to the mold surface. Alternatively, to any material composing a layer formed on the mold surface for the purpose of improving the releasability, i.e., a release agent, the evaluation apparatus of each embodiment of the present invention may be applied to evaluate the degree of adhesion of the release agent. In this case, the release agent gradually peels off from the mold surface as the resin-molding operation is repeated, resulting in failure in molding. Then, in order to evaluate the degree of adhesion of the release agent by means of the intensity of reflected radiation, the degree is determined on a basis as described below, since the intensity of the reflected radiation increases as the release agent peels off.

More specifically, comparator unit 21 compares measurement V_{M} with predetermined reference value Vₛ. If a relation, measurement V_{M} < reference value Vₛ is satisfied, the evaluation apparatus determines that the intensity of each of reflected radiation 16 and reflected radiation 18 is sufficiently small. Then, the degree of adhesion of the release agent to the mold surface is greater than the reference, which means a good releasability of a molded product from a mold is secured and there is no problem accordingly. If there is a relation, measurement V_{M} ≥ reference value Vₛ, any of reflected radiation 16 and reflected radiation 18 has an intensity which is not small enough. The degree of adhesion of the release agent to the mold surface is equal to or smaller than the reference value, and the releasability of the molded product from the mold is deteriorated. Comparator unit 21 accordingly generates a warning signal.

The evaluation as described above is performed of the degree of adhesion of adherents or dirt to a mold employed for a resin-sealing apparatus. Alternatively, the present invention is not limited to the evaluation apparatuses respectively of the above-discussed embodiments. The characteristic structure of the present invention may be applied by being modified or selected arbitrarily and properly as required to the extent that such a modification or selection falls within the scope of the invention.

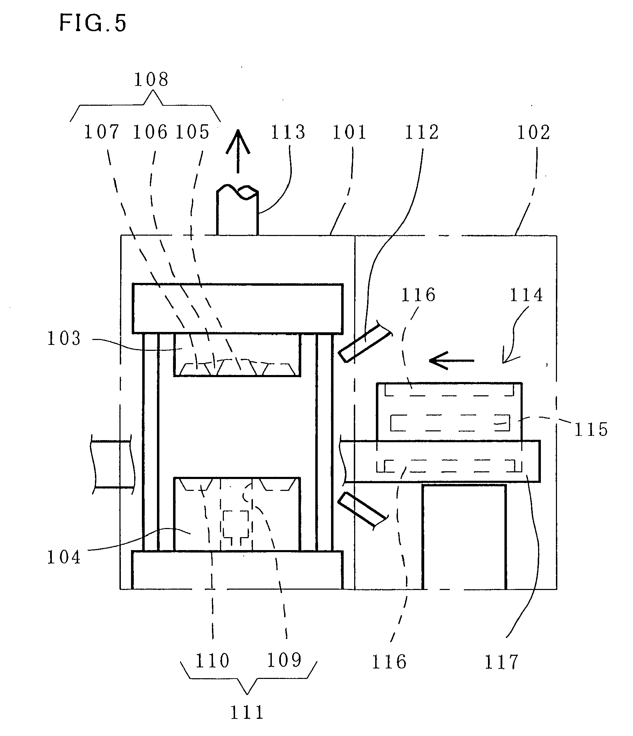

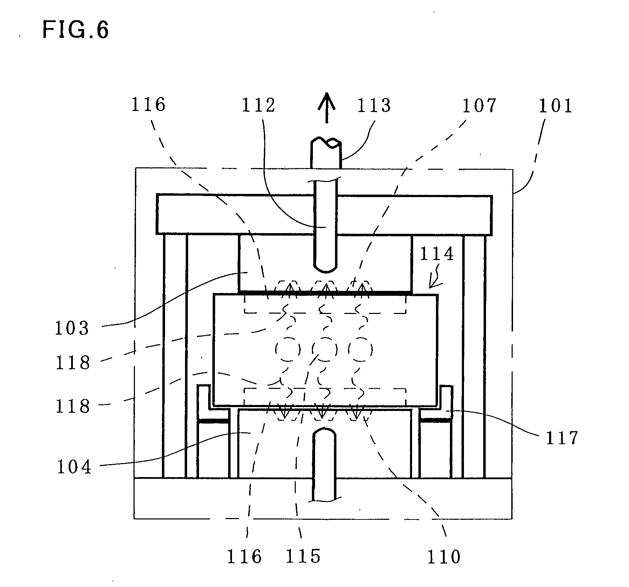

With reference to Figs. 5 and 6, a surface treatment apparatus for a mold surface is described, in connection with a mold used for sealing electronic components with resin, as an example of molds used for molding resin. Fig. 5 is a schematic front view of the surface treatment apparatus of this embodiment showing that the apparatus is incorporated in a resin-sealing apparatus. Fig. 6 is a schematic side view of the surface treatment apparatus in Fig. 5 showing that the apparatus irradiates the mold surface with excimer ultraviolet radiation.

Referring to Fig. 5, a mold unit 101 is used for sealing with resin and a waiting unit 102 is coupled to mold unit 101 to serve as a place where a lamp unit described hereinbelow waits. In mold unit 101, an upper mold 103 and a lower mold 104 are placed to face each other for resin-sealing. Upper mold 103 is fixed and has a cull 105 as well as a runner 106 and a cavity 107 communicating successively with cull 105. Cull 105, runner 106 and cavity 10 7 compose a resin-flowing portion 108 of upper mold 103. Lower mold 104 is movable and has a pot 109 placed opposite to cull 105. Lower mold 104 also has a cavity 110 placed opposite to cavity 107. Pot 109 and cavity 110 compose a resin-flowing portion 111 of lower mold 104. A nozzle 112 is connected via a valve to a gas supply source (both are not shown) to serve as a jet mechanism emitting a jet of a predetermined gas as required. The emitted jet of gas is any gas, except for oxygen, having a property of suppressing attenuation of excimer ultraviolet radiation, a nitrogen gas, for example. An exhaust pipe 113 is connected via a valve to a suction pump (both are not shown) to discharge the gas within mold unit 101 to the outside.

A lamp unit 114 serves as an irradiation mechanism irradiating respective surfaces of upper mold 103 and lower mold 104 with excimer ultraviolet radiation. An excimer lamp 115 is mounted within lamp unit 114 to generate excimer ultraviolet radiation of 172 nm in wavelength by dielectric barrier discharge with xenon (Xe) used as a discharge gas. A translucent window 116 provided on each of the upper and lower sides of lamp unit 114 is made of synthetic quartz glass for example and serves as a window for irradiation. For the purpose of preventing decrease of the illuminance of the excimer ultraviolet radiation on the mold surface, the distance between translucent window 116 and each mold surface is preferably as short as possible. A rail 117 is a transport mechanism for moving lamp unit 114, and lamp unit 114 driven by a motor (not shown) is moved horizontally along rail 117.

An operation of the surface treatment apparatus for the mold surface is now described with reference to Figs. 5 and 6. On respective resin-flowing portions 108 and 111 of upper mold 103 and lower mold 104 heated to a predetermind molding temperature (e.g. 180°C) in advance, a mold release layer containing a specific component as a mold release agent is formed on the mold surface in advance. On the surface of the mold release layer, a component which deteriorates the releasability is generated through the molding.

Referring to Fig. 5, lamp unit 114 is moved from waiting unit 102 along rail 117 and stopped at a predetermined position which allows desired regions on the mold surfaces of upper mold 103 and lower mold 104 to be irradiated uniformly with the excimer ultraviolet radiation passed through translucent window 116. Moreover, a jet of nitrogen gas is emitted by nozzle 112 to the regions close to the mold surfaces of upper mold 103 and lower mold 104. Accordingly, the regions close to the mold surfaces are in an atmosphere of low-oxygen-concentration.

Then, a predetermined high-frequency voltage is applied to excimer lamp 115. Accordingly, as shown in Fig. 6, excimer lamp 115 generates excimer ultraviolet radiation 118 having a predetermined center frequency (e.g. 172 nm). Lamp unit 114 thus irradiates respective mold surfaces of upper mold 103 and lower mold 104, i.e., respective mold surfaces of resin-flowing portions 108 and 111 shown in Fig. 5 with excimer ultraviolet radiation 118 through translucent window 116. The excimer ultraviolet radiation 118 is called VUV (Vacuum Ultraviolet), having a wavelength of an extremely narrow range with its center at the center frequency, i.e., single peak wavelength, and having a characteristic of a high photon energy.

Excimer ultraviolet radiation 118 is emitted under a condition that the energy of excimer ultraviolet radiation 118 has a value to the extent that the mold release layer does not peel off from the mold surface when the mold surface is irradiated for a certain period of time, and this value is determined in advance. In addition, preferably this energy has a value to the extent that the state of the mold surface returns to a state immediately after the mold release layer is formed thereon, namely the initial state, when the mold surface is irradiated for a certain period of time. Excimer ultraviolet radiation 118 having such an energy is emitted to the mold surface to allow the state of the mold surface to become close to the initial state, or return to the initial state, depending on irradiation conditions. The mold surface is thus irradiated with excimer ultraviolet radiation 118 for a certain period of time and then the surface treatment for the mold surface is completed.

Here, a detailed description is given below, regarding the action of excimer ultraviolet radiation 118. By the energy of excimer ultraviolet radiation 118, ozone (O₃) and active oxygen are generated from oxygen present within mold unit 101. Of the generated ozone and active oxygen, the active oxygen in particular causes the surface of the mold release layer to be activated. Then, the state of the mold surface becomes close to the initial state or returns to the initial state depending on irradiation conditions. The gas within mold unit 101 contains ozone which is hazardous to humans and causes metal and polymeric materials to be degraded or corroded. Then, this gas is discharged to the outside of the resin sealing apparatus through exhaust pipe 113.

By the surface treatment apparatus of this embodiment, the space near the mold surface, i.e., the space between translucent window 116 and the mold surface, is in an atmosphere of low-oxygen-concentration as a jet of nitrogen gas is emitted thereinto that has a property of suppressing attenuation of excimer ultraviolet radiation. Attenuation of excimer ultraviolet radiation 118 due to oxygen is thus suppressed. Since there is no decrease of the efficiency of generating ozone and active oxygen, the efficiency of activating the mold surface as the mold surface becomes close to the initial state is maintained. Further, excimer ultraviolet radiation 118 is unlikely to attenuate. Then, even if the mold surface has depressed and protruded portions and is thus uneven, the surface of the entire mold release layer including the mold release layer on the depressed portion of the mold surface is uniformly activated.

Then, emission of the jet of nitrogen gas by nozzle 112 is stopped, and lamp unit 114 is moved along rail 117 to waiting unit 102 shown in Fig. 5. After this, a substrate with electronic components mounted thereon is placed on lower mold 104, upper mold 103 and lower mold 104 are clamped together, melted resin (not shown) is injected from pot 109 into cavities 107 and 110 by being passed successively through cull 105 and runner 106, and the melted resin is cured to produce cured resin.

Then, upper mold 103 and lower mold 104 are opened to take out a molded product (not shown) formed of the substrate and the cured resin. Then, resin-sealing of electronic components is completed.

Next, lamp unit 114 is moved from waiting unit 102 to a predetermined location, and a jet of nitrogen gas is emitted to portions close to the mold surfaces of the upper mold 103 and lower mold 104. As shown in Fig. 6, lamp unit 114 emits excimer ultraviolet radiation 118 to respective mold surfaces of upper mold 103 and lower mold 104. The surface treatment of the mold surfaces and resin-sealing of electronic components are thereafter repeated.

As discussed above, the surface treatment apparatus performs the surface treatment of the mold surfaces, between resin-sealing operations of electronic components, by irradiating respective mold surfaces of upper mold 103 and lower mold 104 with excimer ultraviolet radiation 118 having a single peak wavelength and a high photon energy. Then, the surfaces of the mold release layers on the mold surfaces are activated, the state of the mold surfaces becomes close to the initial state or returns to the initial state depending on irradiation conditions. In resin-sealing of electronic components, the releasability of cured resin from the mold surface is thus ensured to prevent adherents from being deposited on the mold surface. In addition, cleaning with a brush for example is unnecessary, which allows resin-sealing to be carried out successively. Moreover, the efficiency of generating ozone and active oxygen is improved. Even if the mold surface is uneven, the surface of the mold release layer on the mold surface is uniformly activated.

According to the description above of the surface treatment apparatus, after lamp unit 114 is stopped at a predetermined position, excimer lamp 115 is turned on to emit excimer ultraviolet radiation 118. Alternatively, with excimer lamp 115 turned on, the mold surfaces may be irradiated with excimer ultraviolet radiation 118 while lamp unit 114 is moved. In this case, not only the energy of excimer ultraviolet radiation 118 but also the moving speed of lamp unit 114 may preferably be considered to determine the irradiation conditions for the mold release layer. In addition, one or a plurality of excimer lamps 115 may preferably be provided that are perpendicular to the side of the apparatus seen in Fig. 5.

When the surface treatment apparatus is used, the mold surfaces are irradiated each time the resin-sealing operation is performed. Alternatively, a relation between the number of times the resin-sealing operation is successively done, the state of the mold surfaces and the releasability may be evaluated in advance and then the mold surfaces may be irradiated after the resin-sealing operation is done a predetermined number of times according to the evaluation. Lamp unit 114 thus operates a minimum number of times as required, which enhances the working efficiency of resin-sealing.

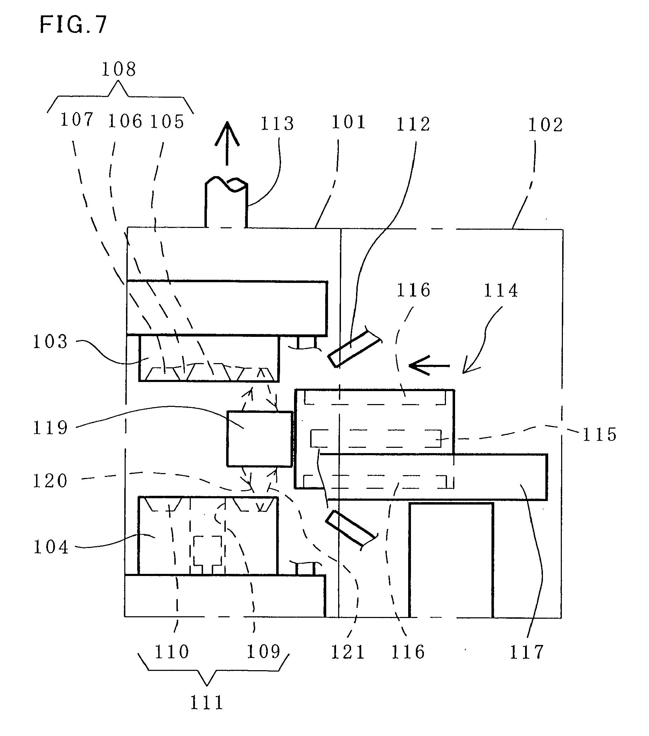

Fig. 7 is a schematic front view of a surface treatment apparatus for a mold surface incorporated in a resin-sealing apparatus. The surface treatment apparatus includes an evaluation mechanism which optically detects the state of the mold surface to determine whether irradiation is necessary or not.

Referring to Fig. 7, a sensor 119 is the evaluation mechanism which emits radiation 120 in both of the upward and downward directions, detects reflected radiation 121 which is radiation 120 reflected from each mold surface, calculates the ratio of reflected radiation 121 to emitted radiation 120, i.e., reflectance, and compares the calculated reflectance with a predetermined reference value. Sensor 119 may be an optical non-contact sensor using, for example, visible radiation, infrared radiation or laser.

An operation of this surface treatment apparatus is described with reference to Fig. 7. As in the surface treatment apparatus shown in Figs. 5 and 6, a lamp unit 114 is moved, and a jet of nitrogen gas is emitted to regions close to respective mold surfaces of an upper mold 103 and a lower mold 104 by a nozzle 112.

Sensor 119 then reaches the position facing cavities 107 and 110 to emit radiation 120 in both of the upward and downward directions and then detect reflected radiation 121 which is radiation 120 reflected from respective surfaces of cavities 107 and 110. Further, sensor 119 calculates the reflectance to compare the calculated reflectance with a predetermined reference value. Respective operations of detection of reflected radiation 121, calculation of the reflectance and comparison between the reflectance and the reference value may be shared by the sensor body and a calculating unit.

If the calculated reflectance is equal to or higher than the reference value, for example, sensor 119 determines that there is only a slight change in the state of the mold surface relative to an initial state and thus generates no signal which turns on an excimer lamp 115. Accordingly, lamp unit 114 returns to a waiting unit 102 without emitting radiation, upper mold 103 and lower mold 104 are clamped together and normal resin-sealing operation is carried out.

On the other hand, if the calculated reflectance is lower than the reference value, sensor 119 determines that the state of the mold surface changes relative to the initial state and generates a signal for turning on excimer lamp 115. According to this signal, lamp unit 114 irradiates the mold surface with radiation under predetermined conditions for irradiation and thereafter returns to waiting unit 102. Then, normal resin-sealing operation is performed.

As discussed above, this surface treatment apparatus determines, based on the result of optical evaluation of the state of the mold surface, whether or not the mold surface is to be irradiated with the radiation. Accordingly, an effect similar to that achieved by the surface treatment apparatus of Figures 5 and 6 is obtained. In addition, since the radiation is emitted to the mold surface as required so as to cause the mold surface to return to the initial state, the working efficiency of the resin-sealing is further improved.

According to the description of the surface treatment apparatus of Fig. 7, radiation is emitted to the mold surface with lamp unit 114 being stopped. Alternatively, the radiation may be emitted to the mold surface while lamp unit 114 is moving.

It is determined whether or not the mold surface is to be irradiated, according to the result of evaluation by sensor 119. Alternatively, based on the result of evaluation by sensor, such conditions irradiation as the period of time for irradiation while the lamp unit is the moving speed when the radiation is emitted while the lamp unit is moving, the distance for irradiation and the illuminance, for example maybe determined. Specifically, if it is determined by the evaluation that the surface of a mold release layer considerably changes relative to the initial state, the irradiation time may be extended to allow the surface of the mold release layer to return to the initial state.

Sensor 119 may evaluate the state of the mold surface by calculating respective reflectances of a plurality of points to find any point where the state of the mold surface changes to the greatest degree and accordingly makes an evaluation based on that point, or calculates the average of the reflectances and makes an evaluation based on the average. Alternatively, the reflectance of a point of each of cavities 107 and 1.10 that is close to a runner 106 may be calculated by using that point as a pinpoint, in order to evaluate the state of the mold surface.

In this surface treatment apparatus, sensor 119 calculates the reflectance and compares the reflectance with the reference value. Alternatively, the state of the mold suface may be evaluated based on image data obtained by taking a picture of a certain region. For example, sensor 119 used here may include a CCD camera and an image processing unit to binarize the obtained image with a predetermined threshold and compare the area of a region of a high density with a reference value.

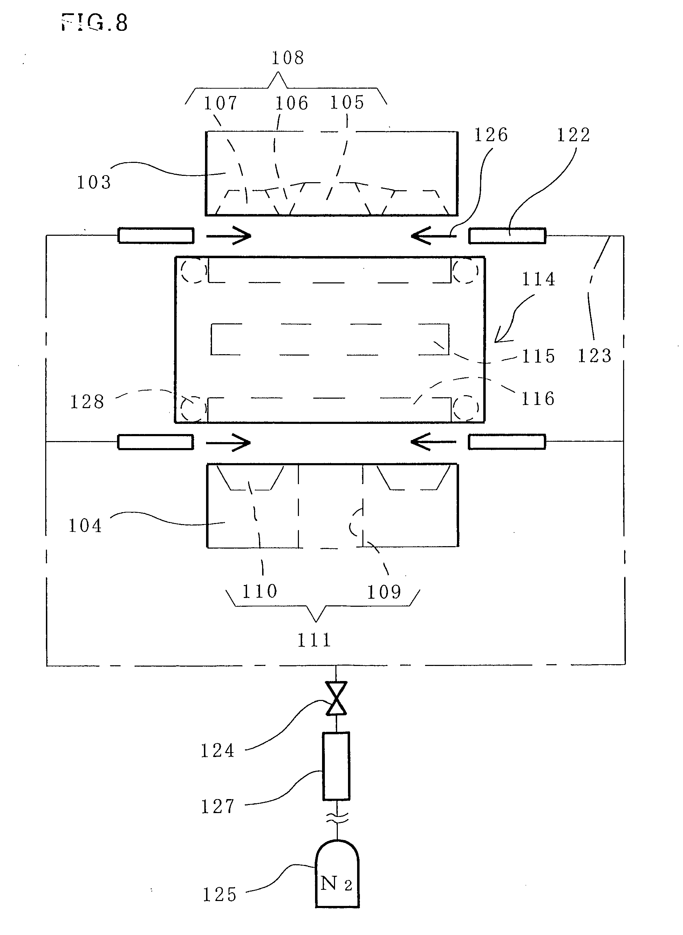

Fig. 8 is a schematic front view of a surface treatment apparatus for a mold surface showing that the apparatus is included in a resin-sealing apparatus to carry out surface treatment. This has a characteristic that the surface treatment apparatus for the mold surface has a mechanism of heating and supplying gas.

Referring to Fig. 8, nozzles 122 are provided to constitute a jetting mechanism connected via a gas pipe 123 and a valve 124 to a gas source 125 and placed, for example, to extend from respective corners of a lamp unit 114 toward respective centers of the top surface and the bottom surface of the lamp unit. From this nozzle 122, a jet of gas having a property of suppressing attenuation of excimer ultraviolet radiation, nitrogen gas 126 for example, is emitted to the regions near respective mold surfaces of an upper mold 103 and a lower mold 104. A heater is a heating mechanism provided on gas pipe 123 between gas source 125 and valve 124 to heat nitrogen gas 126 to a predetermined temperature (e.g. 180°C equal to molding temperature). A cooling pipe 128 is a cooling mechanism placed around a translucent window 116 of lamp unit 114 to cool translucent window 116 to a predetermined temperature (e.g. 120°C) or less by circulating such fluid coolant like water.

If it is possible to heat emitted jet of nitrogen gas 126 to a predetermined temperature, heater 127 may be provided on gas pipe 123 near each nozzle 122. In this case, valve 124 may be attached closer to nozzle 122 relative to heater 127.

Instead of cooling pipe 128, such a cooling mechanism as Peltier device may be provided near translucent window 116.

The surface treatment apparatus of Figure 8 provides advantages as described below. First, the effect of activating the surface of a mold release layer is maintained, since the temperature of the mold surface is kept constant. In other words, nitrogen gas 126 heated to a predetermined temperature by heater 127 is jetted to the regions near respective mold surfaces of upper mold 103 and lower mold 104 to allow the temperature of the mold surface to be kept at a molding temperature. Here, the effect of activating the surface of the mold release layer by ozone and active oxygen generated by excimer ultraviolet radiation is reduced if the temperature of the mold surface decreases. Then, as the temperature of the mold surface is kept at the molding temperature, the effect of activating the surface of the mold release layer is maintained.

Second, the illuminance of excimer ultraviolet radiation on the mold surface is maintained. Specifically, translucent window 116 is cooled by cooling pipe 128. As translucent window 116 made of synthetic quartz glass has a property that the transmission factor decreases as the temperature increases.. Then, the transmission factor of translucent window 116 is maintained by cooling translucent window 116 and thus the illuminance of the excimer ultraviolet radiation on the mold surface is maintained.

Regarding the surface treatment apparatus discussed in relation to Figures 5, 6, 7 and 8, nozzle 122, lamp unit 114 (and sensor 119) may be attached to a transport mechanism for loading a substrate and unloading a molded product, i.e., a loader and an unloader. Then, in any of the situations prior to loading of a substrate and subsequent to unloading of a molded product, the surface treatment of the mold surface is readily performed. The mold surface is thus returned to the initial state in a shorter period of time and at a higher frequency.

Both of the upper and lower molds 103 and 104 undergo the surface treatment. Alternatively, the mold surface of any one of these molds may undergo the surface treatment.

Nozzle 122, lamp unit 114 (and sensor 119) may be provided for the surface of only one of the upper and lower molds to emit a jet of gas to this mold surface, emit excimer ultraviolet radiation and evaluate the state of the mold surface. In this case, nozzle 122, lamp unit 114 (and sensor 119) may be inverted as required.

The discharge gas composed of xenon (Xe) only is used here to generate excimer ultraviolet radiation. Alternatively, any discharge gas containing at least one of elements F, Ar, Kr, Xe for example may be used. In this case, excimer ultraviolet radiation having a single peak wavelength except for the wavelength of 172 nm, particularly a single peak wavelength shorter than 172 nm, is obtained as well.

According to the description above, the mold release layer is formed with the intention of using melted resin containing an ample amount of mold release agent for ensuring the releasability. Alternatively, the layer formed on the mold surface may be an organic thin film, plating layer or the like for ensuring the releasability. In addition, the present invention may be applied to ensure the releasability between cured resin and a layer formed on the mold surface without the purpose of ensuring the releasability.

The mold described above is used for sealing electronic components with resin. Alternatively, the present invention is applicable to other molds for molding resin.

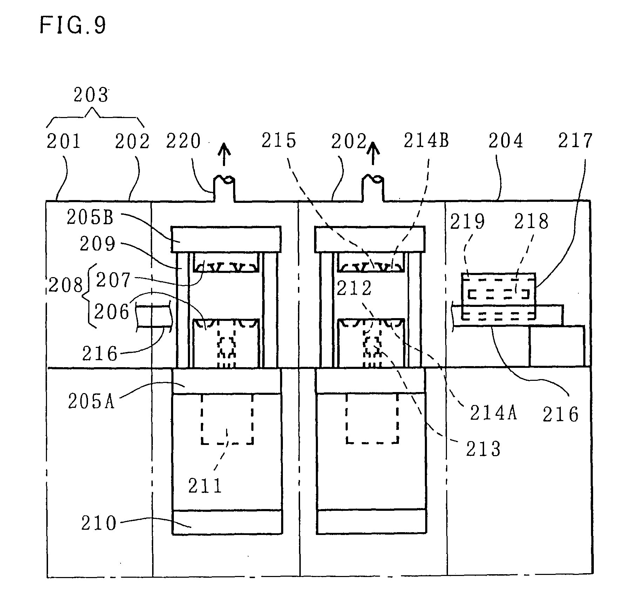

Figs. 9-11 describe cleaning apparatus regarding cleaning of a mold used for a resin-sealing apparatus. Fig. 9 is a schematic front view of a resin-sealing apparatus having a cleaning apparatus attached thereto.

Referring to Fig. 9, a loading/unloading unit 201 is provided near the resin-sealing apparatus for loading a circuit board with electronic components mounted thereon into the resin-sealing apparatus and unloading a resin-sealed package therefrom. Further, a molding unit 202 is provided near the resin-sealing apparatus for sealing the circuit board having electronic components mounted thereon with resin. Loading/unloading unit 201 and molding unit 202 constitute an elementary unit 203 which is a minimum component of the resin-sealing apparatus. A cleaning unit 204 is further provided near the resin-sealing apparatus that has a cleaning apparatus for cleaning a mold (described later) used for the resin-sealing apparatus.

The resin-sealing apparatus includes clamping plates 205A and 205B for securing a movable lower mold 206 and a stationary upper mold 207 respectively. The resin-sealing apparatus includes this movable lower mold 206 secured to the lower clamping plate 205A which is provided to freely move up and down as well as stationary upper mold 207 secured to the upper clamping plate 2058. Movable lower mold 206 and stationary upper mold 207 compose a mold 208 for sealing with resin. The resin-sealing apparatus further includes a tie-bar 209 connected to the main body via clamping plates 205A and 205B. The resin-sealing apparatus includes a bottom base 210 constituting the lowest part of the body of molding unit 202. The resin-sealing apparatus includes a mold open/close mechanism 211 which closes or opens mold 208 by moving clamping plate 205A upward or downward or allowing movable lower mold 206 to ascend or descend.

Further, the resin-sealing apparatus includes a pot 212 which is a cylindrical space and a plunger 213 movable up and down in pot 212 that are provided to movable lower mold 206. The resin-sealing apparatus includes cavities 214A and 214B provided respectively to movable lower mold 206 and stationary upper mold 207 that are each a space into which melted resin is injected. The resin-sealing apparatus includes a cull 215 which is placed to face pot 212 of movable lower.mold 206 and is a space provided in stationary upper mold 207.

Moreover, the resin-sealing apparatus includes a guide rail 216 secured to loading/unloading unit 201 and cleaning unit 204 to pass each molding unit 202. The resin-sealing apparatus includes a cleaner unit 217 for cleaning the mold surface of mold 208 by emitting excimer radiation to the mold surface of mold 208. The resin-sealing apparatus includes, in the cleaner unit 217, one or a plurality of (three in the resin-sealing apparatus of this embodiment) excimer lamps 218 depending on the size of an object to be cleaned, the excimer lamp generating excimer radiation. Within the excimer lamp 218, discharge gas containing at least one of the elements F, Ar, Kr and Xe is enclosed, for example, xenon (Xe) is enclosed. The resin-sealing apparatus further includes a translucent window 219 fit in an opening of each of the top and bottom surfaces of cleaner unit 217 and made of a material which allows excimer radiation to pass, quartz glass, for example. In addition, the resin-sealing apparatus includes an exhaust pipe 220 provided to on the top surface of each molding unit 202 and connected to an exhaust mechanism (not shown).

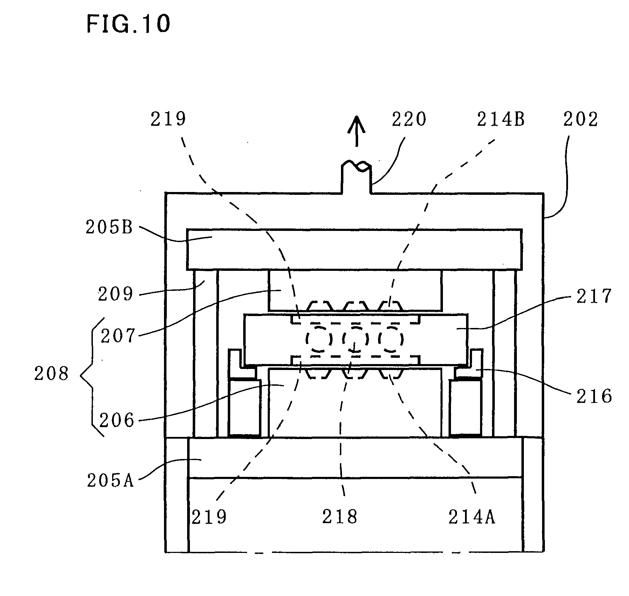

An operation of the cleaning apparatus is now described with reference to Figs. 9-11. Fig. 10 is a schematic side view of the resin-sealing apparatus shown in Fig. 9 showing that the cleaning apparatus cleans the surface of the mold with excimer radiation.

When no resin-molding is performed by mold 208, namely movable lower mold 206 and stationary upper mold 207 are separated from each other, cleaner unit 217 is moved along guide rail 216 toward molding unit 202. Cleaner unit 217 is stopped at a position which allows a desired region of the mold surface of each of movable lower mold 206 and stationary upper mold 207 to be irradiated uniformly with excimer radiation passed through translucent window 219. The distance between translucent window 219 and each mold surface is preferably as small as possible in order to prevent the intensity of the excimer radiation from decreasing.

A predetermined high-frequency voltage is applied to each of the three excimer lamps 218. Accordingly, each excimer lamp 218 which uses xenon (Xe) as discharge gas generates excimer radiation having a center wavelength (peak) of 172 nm. The excimer radiation is thus emitted through each translucent window 219 to each of respective mold surfaces of movable lower mold 206 and stationary upper mold 207. The energy of the excimer radiation having its wavelength in an extremely small range with the center frequency at the center, i.e., single peak wavelength, breaks the chemical bond of any matter adhering to the irradiated mold surface, such an organic material as resin residue. The firmness of bonding between the mold surface and the matter adhering to the mold surface is thus lessened.

Irradiation with the excimer radiation is continued. Then, ozone (O₃) and atoms of active oxygen generated by the excimer energy act on the adhering matter with the lessened firmness of bonding to oxidize, decompose and accordingly volatilize the adhering matter. The adhering matter is thus removed from the mold surface. By means of exhaust pipe 220, the adhering matter removed from the mold surface is discharged to the outside of the apparatus. As the generated ozone is hazardous to humans, the atmosphere containing the ozone is also discharged to the outside of the apparatus by means of exhaust pipe 220. After irradiation with the excimer radiation is continued for a predetermined time necessary for cleaning, excimer lamps 218 are turned off.

Through the above-discussed operation, the mold surfaces, i.e., respective surfaces of the top part of pot 212 (not shown in Fig. 10), cavities 214A and 214B, cull 215 (not shown in Fig. 10) and a resin passage communicating with cavity 214A and cull 215 are irradiated with the excimer radiation having a single peak wavelength, a high energy conversion efficiency and a high photon energy, particularly having a center wavelength of 172 nm. Such a matter adhering to the mold surface as residue of resin is thus removed from the mold surface in a short period of time.

As cleaner unit 217 having excimer lamps 218 is moved to irradiate the surface of resin-sealing mold 208 with excimer radiation, mold 208 is cleaned by cleaner unit 217 incorporated in the resin-sealing apparatus. The process of cleaning mold 208 is thus automated.

Further, as excimer lamps 218 are illuminated for a predetermined period of time, reduction of the energy consumption as well as increase of the life of excimer lamps 218 are achieved.

In addition, as mold 208 is cleaned in non-contact manner, mold 208 is cleaned with its surface receiving no damage.

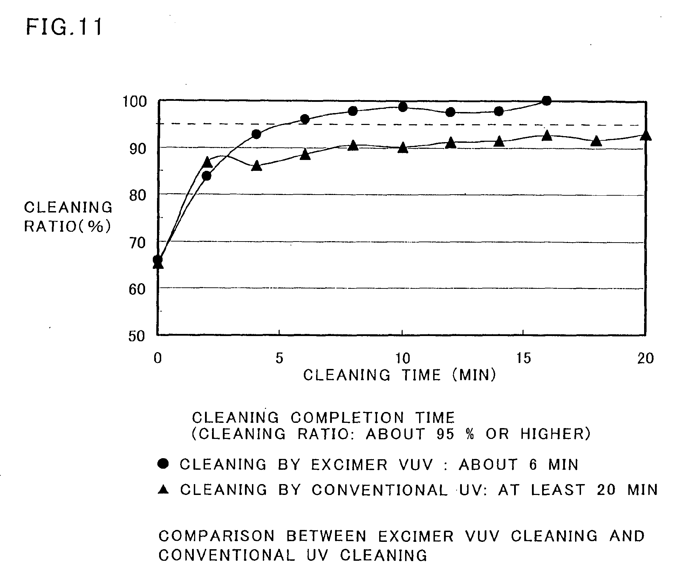

Fig. 11 illustrates an effect of the cleaning apparatus of this embodiment as compared with a conventional cleaning apparatus using ultraviolet radiation from a low-voltage mercury lamp. Dirt on the surface of mold 208 is detected optically by a sensor and converted into a numerical value. Here, a cleaning ratio of 100 % refers to the state without adhering dirt, namely the state in which the color and gloss of plating itself of mold 208 before resin-sealing are detected as they are. Cleaning is regarded as being completed when it is determined by visual inspection of the surface of mold 208 that the color and gloss of the mold surface are equivalent to those of plating itself. It has been confirmed empirically that, if it is determined by visual inspection that the surface of mold 208 has its color and gloss identical to those of plating itself, no particular problem occurs in resin sealing.

Specifically, two molds 208 of the same type are used, and resin-sealing is performed the same number of times by these molds in order to cause dirt to stick to respective mold surfaces to the same degree. A sensor is used to detect the dirt on the surface of mold 208 and a relative value of dirt with respect to the cleaning ratio of 100 % is calculated to use the resultant relative value as an initial value. This initial value thus calculated corresponds to the cleaning ratio of 66 % .

Then, one of the two molds 208 having dirt adhering thereto to the same degree is cleaned and the other mold is cleaned by the conventional method. At every two minutes of irradiation time, i.e., cleaning time, the dirt on the surface of mold 208 is detected by the sensor to calculate a relative value of the dirt. In any case, the mold temperature during irradiation is 180°C and the irradiation is done in an atmosphere.

As shown in Fig. 11, the cleaning ration increases as cleaning time passes for both of the cleaning using the apparatus in Figures 9 and 10 and the conventional cleaning, and accordingly the dirt is removed step by step. Respective graphs for cleaning using the apparatus of Figures 9 and 10 and the conventional cleaning are both slightly uneven, which could be due to variations of measurement.

From the comparison of the time consumed for completing the cleaning (cleaning completion time), it is seen that the cleaning completion time using the apparatus of Figures 9 and 10 is approximately six minutes while the cleaning ratio of the conventional cleaning is 92-93% and substantially reaches saturation even when twenty minutes have passed. Then, cleaning is completed in approximately six minutes while the conventional cleaning does not attain a satisfactory level even when twenty minutes have passed. The cleaning using the apparatus of Figures 9 and 10 thus provides an effect superior to that of the conventional cleaning.

For cleaning using the apparatus of Figures 9 and 19, one excimer lamp is used that has a lamp power of 20 W and uses xenon (Xe) as discharge gas. The center wavelength (peak) of generated eximer radiation is 172 nm. A final distance between the mold surface and the bottom surface of the translucent window from which the excimer radiation is emitted toward the mold surface is 4 mm.

For the conventional cleaning, one low-voltage mercury lamp having a lamp power of 3.0 kW is used. The wavelength of generated ultraviolet radiation is 254 nm and 185 nm. A final distance between the mold surface and the surface of a lamp tube from which the ultraviolet radiation is emitted toward the mold surface is 55 mm.

The difference in lamp power between these two cleaning methods is due to different principles of irradiation. The difference in distance between the place from which radiation is emitted and the mold surface is due to constraints on the apparatuses. However, this difference in the distance would have almost no influence on the cleaning effect since the ultraviolet radiation generated by the low-voltage mercury lamp is extremely unlikely to be absorbed by the air.

The radiant emittance at the place from which the excimer radiation or ultraviolet radiation is emitted is 15 mW/cm² for the excimer radiation and 25 mW/cm² for the ultraviolet radiation (wavelength 254 nm) from the low-voltage mercury lamp. This fact means that the excimer radiation and the ultraviolet radiation have the radiant emittance of the same order and the excimer radiation having a single peak wavelength has a higher energy conversion efficiency relative to other radiations.

Adherents sticking to the mold surface like residue of resin may not be removed satisfactorily by excimer radiation only, if, for example, sealing resin is bonded firmly (to the mold surface) or the mold surface has a complex shape.

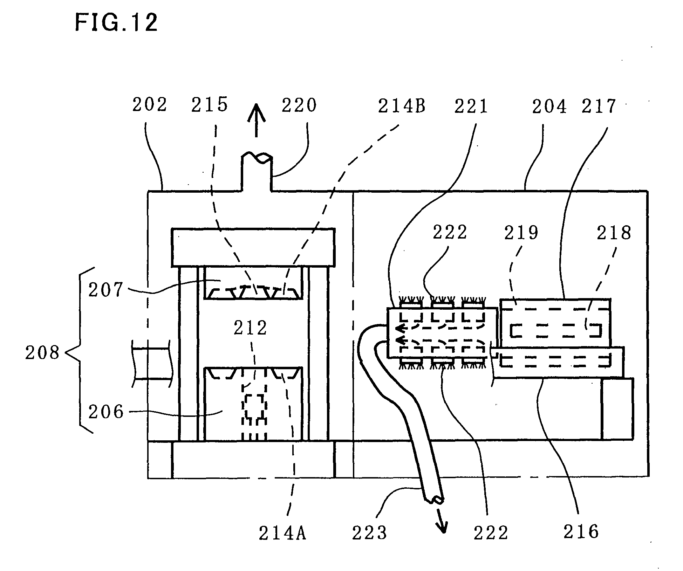

A cleaning method is now described with reference to Fig. 12 regarding cleaning of a mold used for a resin-sealing apparatus. Fig. 12 is a schematic front view of the resin-sealing apparatus showing a main portion thereof, the sealing apparatus having a cleaning apparatus of this embodiment attached thereto.

Referring to Fig. 12, the resin-sealing apparatus includes a cleaning unit 221 using a brush and a suction tube that are described below. Cleaning unit 221 is placed adjacently to a cleaner unit 217 using an excimer lamp 218 and attached to a guide rail 216 to be movable forward and backward. Metal meshes are mounted respectively on top and bottom surfaces of cleaning unit 221. The resin-sealing apparatus includes brushes 222 provided on both of the top and bottom surfaces of cleaning unit 221 having respective leading ends touching respective mold surfaces of a movable lower mold 206 and a stationary upper mold 207. Further, the resin-sealing apparatus includes a suction tube 223 provided on any side of cleaning unit 221 and connected to a suction mechanism (not shown). This structure allows the atmosphere near both of the top and bottom surfaces of cleaning unit 221 to be sucked into cleaning unit 221 by suction tube 223.

The cleaning apparatus including cleaner unit 217 and cleaning unit 221 operates as detailed below.

With movable lower mold 206 and stationary upper mold 207 being opened, cleaner unit 217 and cleaning unit 221 are moved along guide rail 216 toward a molding unit 202. Cleaner unit 217 is then stopped at a position to allow desired regions on respective mold surfaces of movable lower mold 206 and stationary upper mold 207 to be irradiated uniformly with excimer radiation passed through translucent windows 219.

In this cleaning apparatus, as in the cleaning apparatus of Figures 9 and 10, excimer lamp 218 emits excimer radiation through respective translucent windows 219 onto respective mold surfaces of movable lower mold 206 and stationary upper mold 207. Accordingly, the energy of the excimer radiation lessens the firmness of bonding between the mold surface and adherents to the mold surface.

Further, this cleaning apparatus continues to emit, as the cleaning apparatus of Figures 9 and 10, the excimer radiation to oxidize, decompose and volatilize the adherents with lessened firmness of bonding. In this way, the adherents to the mold surface are removed in a short time from the mold surface. Then, through an exhaust pipe 220, the adherents removed from the mold surface as well as the atmosphere containing generated ozone are discharged to the outside of the apparatus.

After cleaner unit 217 is moved from the location between movable lower mold 206 and stationary upper mold 207, cleaning unit 221 is moved instead to the location between movable lower mold 206 and stationary upper mold 207. Then, brush 222 is rotated to physically remove adherents with firmness of bonding lessened that are not volatilized by the excimer radiation only and thus remain on the mold surface. Suction tube 223 sucks the removed adherents in the vicinity of the mold surface through the metal mesh mounted on each of the upper and lower sides of cleaning unit 221 and discharges them to the outside of the resin-sealing apparatus.

Through the above-discussed operation, after irradiation with the excimer radiation, brush 222 and suction tube 223 are used to sufficiently remove such adherents as residue of resin sticking to mold surfaces, i.e., respective surfaces on pot 212, cavities 214A and 214B, cull 215, and the resin passage communicating with cavity 214B and cull 215.

Brush 222 described in connection with this embodiment may be a rotating brush, reciprocating brush or brush with the tips of bristles vibrating quickly.

Instead of brush 222, a blowing mechanism emitting a jet of highpressure gas toward the mold surface may be employed. The jet of high-pressure gas emitted to the mold surface physically removes adherents with firmness of bonding lessened that are not volatilized by the excimer radiation only and thus remain on the mold surface.

After cleaning by brush 222 or the blowing mechanism, the mold surface may be irradiated with excimer radiation.

As discussed above, the cleaning apparatus emits the excimer radiation to sufficiently remove, by using brush 222 and suction tube 223, the adherents with the lessened firmness of bonding to the surface of mold 208, from the mold surface.

Regarding each of respective resin-sealing apparatuses of Figures 5-8, 9, 10 and 12, mold 208 for the resin-sealing apparatus is described as one example of molds used for molding resin. Alternatively, the present invention is applicable to general molds for molding resin.

The cleaning apparatuses of Figures 9, 10 and 12 described above move cleaner unit 217 having excimer lamp 218 to emit the excimer radiation to mold 208 for molding resin. Alternatively, cleaner unit 217 may independently be provided to emit excimer radiation to dismounted mold 208. In this case, the relative positions of cleaner unit 217 and mold 208 are determined to allow some parts of mold 208 that are likely to be subjected to residue of resin for example adhering thereto, i.e., fine depressions or corners of cavities 214A and 214B, to be irradiated sufficiently with excimer radiation. Accordingly, the effect of removing such adherents as residue of resin from the surface of mold 208 is improved.

Cleaner unit 217 and cleaning unit 221 may be moved manually by an operator as required, or by manual operation of a motor for example by a switch. Further, each time one molding process is completed, or after the molding process is conducted a predetermined number of times, cleaner unit 217 and cleaning unit 221 may be moved for cleaning, which is namely an automatic operation.

Mold 208 for molding resin is usually heated, in the resin-molding process, to approximately 175°C-180°C by a heater. In this state, excimer radiation may be emitted. In this case, as mold 208 is heated, the firmness of bonding of adherents with respect to the mold surface is more likely to be lessened. The effect of removing adherents from the surface of mold 208 is thus enhanced to shorten the cleaning time. If cleaner unit 217 may independently be provided to emit excimer radiation to dismounted mold 208, mold 208 may be heated to shorten the cleaning time.

Not only mold 208 for molding resin that is to be cleaned, but also a circuit board with or without electronic components mounted thereon may be irradiated with excimer radiation. Adherents sticking to the circuit board are thus removed. In this way, the strength of bonding between electronic components and the circuit board is improved and further, the reliability of electrical connection between the electronic components and electrodes of the circuit board, for example, wire or bump connection, is improved. Moreover, in resin-sealing, the strength of bonding between the circuit board and sealing resin is improved. Accordingly, as moisture is prevented from entering a package, the reliability of the package is enhanced.

In particular, for such a component as a circuit board which is likely to receive damage, the non-contact cleaning by means of excimer radiation prevents the component to be cleaned from being damaged.

Excimer lamp 218 generates an extremely small amount of heat, and thus the temperature of translucent window 219 is approximately 40°C even when the lamp is illuminated. Cleaning is thus accomplished without thermally damaging not only metal plating but also the circuit board made of a material susceptible to heat.

In addition, excimer lamp 218 may be turned on/off instantaneously by applying/interrupting a high-frequency voltage. Then, a high-frequency voltage may be applied to excimer lamp 218 in pulsing manner to emit excimer radiation intermittently. In this case, each time the lamp is turned on, the energy of excimer radiation lessens the firmness of bonding between the surface of a component to be cleaned and the surface of adherents, and causes ozone (O₃) and active oxygen atoms to act on adherents with lessened bonding firmness.

Cleaner unit 217 used here emits radiation to both sides of a component to be cleaned. Alternatively, a cleaner unit may emit radiation to one side. In addition, the cleaner unit emitting radiation to one side may be inverted to emit radiation to both sides.

The number of excimer lamps 218 is appropriately increased/decreased depending on the size of a component to be cleaned. For example, if excimer radiation is emitted to a slender leadframe of the circuit board, a single excimer lamp may be employed. If a mold having the mold surface of a large area is to be cleaned, an increased number of excimer lamps may be used.

As for the discharge gas, instead of xenon (Xe), another gas may be used. For example, excimer radiation generated by fluorine (F) gas has a center wavelength of 153 nm, excimer radiation generated by krypton (Cr) gas has a center wavelength of 146 nm, and excimer radiation generated by argon (Ar) gas has a center wavelength of 126 nm. In addition, excimer radiation generated by krypton/chlorine (Kr/Cl) has a center wavelength of 222 nm. Any of the excimer radiations may be used to clean a component to be cleaned.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An evaluation apparatus evaluating the degree of adhesion of adherents to a mold surface of a mold (1, 2) used for molding resin, comprising:
detection means (13, 14, 23) for detecting optical data of said mold surface;
operation means (20) for calculating a measurement indicating said degree of adhesion based on said optical data; and
comparison means (21) comparing said measurement with a predetermined reference value to generate, when said measurement indicating said degree of adhesion is equal to or larger than said reference value, a warning signal indicating that said adhesion is to such a degree that causes a malfunction.

2. The evaluation apparatus according to claim 1, wherein
said detection means (13, 14) emits radiation to detect the intensity of reflected radiation of said emitted radiation,
said operation means (20) calculates a value, as said measurement, based on said intensity of the reflected radiation, and
said comparison means (21) compares said intensity of the reflected radiation with said reference value.

3. The evaluation apparatus according to claim 1, wherein
said detection means (23) takes a picture of a predetermined area of said mold surface,
said operation means (20) calculates, as said measurement, an area where the density of said picture exceeds a predetermined level, and
said comparison means (21) compares said area with said reference value.

4. An evaluation method of evaluating the degree of adhesion of adherents to a mold surface of a mold (1, 2) used for molding resin, comprising the steps of:
detecting optical data of said mold surface (S1);
calculating a measurement indicating said degree of adhesion based on said optical data (S2, S3); and
comparing said measurement with a reference value (S4) to generate, when said measurement indicating said degree of adhesion is equal to or larger than said reference value, a warning signal indicating that said adhesion is to such a degree that causes a malfunction (S5).
